(19) Europäisches Patentamt
European Patent Office
Office européen des brevets

(11) Veröffentlichungsnummer : **0 419 976 B1**

# (12) EUROPÄISCHE PATENTSCHRIFT

(45) Veröffentlichungstag der Patentschrift :
**24.11.93 Patentblatt 93/47**

(51) Int. Cl.$^5$ : **C09B 29/085,** C10L 1/00

(21) Anmeldenummer : **90117781.6**

(22) Anmeldetag : **15.09.90**

## (54) Öllösliche Azofarbstoffe auf Anilinbasis.

(30) Priorität : **26.09.89 DE 3931999**

(43) Veröffentlichungstag der Anmeldung :
**03.04.91 Patentblatt 91/14**

(45) Bekanntmachung des Hinweises auf die Patenterteilung :
**24.11.93 Patentblatt 93/47**

(84) Benannte Vertragsstaaten :
**CH DE ES FR GB IT LI NL**

(56) Entgegenhaltungen :
**EP-A- 0 134 446**
**EP-A- 0 256 460**
**FR-A- 2 095 308**
**GB-A- 1 142 239**

(73) Patentinhaber : **BASF Aktiengesellschaft**
**Carl-Bosch-Strasse 38**
**D-67063 Ludwigshafen (DE)**

(72) Erfinder : **Derber, Bernd**
**Moselstrasse 26**
**D-6703 Limburgerhof (DE)**
Erfinder : **Hansen, Günter, Dr.**
**Alwin-Mittasch-Platz 8**
**D-6700 Ludwigshafen (DE)**
Erfinder : **Reichelt, Helmut, Dr.**
**Johann-Gottlieb-Fichte-Strasse 56**
**D-6730 Neustadt (DE)**
Erfinder : **Vamvakaris, Christos, Dr.**
**Riedweg 6**
**D-6701 Kallstadt (DE)**
Erfinder : **Zeidler, Georg**
**Mutterstadter Strasse 7**
**D-6701 Dannstadt-Schauernheim (DE)**

EP 0 419 976 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Azofarbstoffe der Formel I

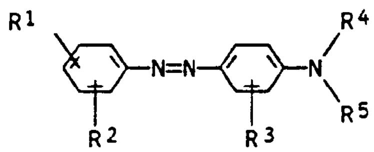

(I),

in der

| | |
|---|---|
| $R^1$ $R^2$ und $R^3$ | gleich oder verschieden sind und unabhängig voneinander jeweils Wasserstoff, $C_1$-$C_4$-Alkyl oder $C_1$-$C_4$-Alkoxy, |
| $R^4$ | $C_1$-$C_6$-Alkyl und |
| $R^5$ | $C_2$-$C_8$-Alkyl, das durch Hydroxy substituiert ist und durch 1 bis 3 Sauerstoffatome unterbrochen sein kann, bedeuten, |

mit der Maßgabe, daß die Summe der Kohlenstoffatome in den Resten $R^4$ und $R^5$ mindestens 5 beträgt, Mineralöle, enthaltend die neuen Farbstoffe sowie die Verwendung der neuen Farbstoffe zum Markieren von Mineralölen.

Aus der DE-A-2 129 590 sind Azofarbstoffe bekannt, deren Diazokomponente und Kupplungskomponente aus der Anilinreihe stammen. Der Rest der Kupplungskomponente trägt dabei eine Hydroxyalkylgruppe, die acetalisiert ist.

Diese Komponenten eignen sich gemäß der EP-A-256 460 zusammen mit öllöslichen Farbstoffen zum Markieren von Mineralölen. Bei der Nachweisreaktion ergibt der acetalisierte Farbstoff mit wäpriger Mineralsäure eine Farbreaktion. Nachteilig ist hierbei, daß vom acetalisierten Farbstoff ausgegangen werden muß, dessen Herstellung eine zusätzliche Verfahrensstufe erfordert.

Weiterhin sind unter der Colour-Index-Nr. C.I. 11 125 und C.I. 11 200 Farbstoffe bekannt, deren Kupplungskomponente (N-(n-Butyl)-N-(2-hydroxyethyl)anilin ist und deren Diazorest sich von 2-Chlor-4-nitroanilin oder 2,4-Dinitro-6-bromanilin ableitet. Es hat sich jedoch gezeigt, daß diese Farbstoffe zum Markieren von Mineralölen wenig geeignet sind.

Aufgabe der vorliegenden Erfindung war es nun, neue Azofarbstoffe bereitzustellen, deren Diazokomponente und Kupplungskomponente beide aus der Anilinreihe stammen, wobei der Rest der Kupplungskomponente über eine Hydroxyalkylgruppe verfügen sollte. Diese Farbstoffe sollten sich dabei auf vorteilhafte Weise zum Markieren von Mineralölen eignen.

Demgemäß wurden die eingangs näher bezeichneten Azofarbstoffe der Formel I gefunden.

Alle in der obengenannten Formel I auftretenden Alkylgruppen können sowohl geradkettig als auch verzweigt sein.

Reste $R^1$, $R^2$, $R^3$ und $R^4$ sind z.B. Methyl, Ethyl, Propyl, Isopropyl, Butyl, Isobutyl, sec-Butyl oder tert-Butyl.

Reste $R^1$, $R^2$ und $R^3$ sind weiterhin z.B. Methoxy, Ethoxy, Propoxy, Isopropoxy, Butoxy, Isobutoxy oder sec-Butoxy.

Reste $R^4$ sind weiterhin z.B. Pentyl, Isopentyl, Neopentyl, tert-Pentyl oder Hexyl.

Reste $R^5$ sind z.B. 2-Hydroxyethyl, 2- oder 3-Hydroxypropyl, 3-Hydroxprop-2-yl, 2-Hydroxybutyl, 4-Hydroxybutyl, 1-Hydroxybut-2-yl, 3-Hydroxybut-2-yl, 3-Hydroxybutyl, 5-Hydroxy-3-oxapentyl, 2,5-Diethyl-5-hydroxy-3-oxapentyl oder 8-Hydroxy-3,6-dioxaoctyl.

Wenn $R^5$ in Formel I einen Alkylrest bedeutet, der durch Sauerstoffatome unterbrochen ist, sind solche Alkylreste bevorzugt, die durch ein oder zwei Sauerstoffatome, insbesondere ein Sauerstoffatom unterbrochen sind.

Bevorzugt sind solche Azofarbstoffe der Formel I, in der $R^3$ in ortho-Position zur Azobrücke steht.

Besonders bevorzugt sind Azofarbstoffe der Formel I, in der

| | |
|---|---|
| $R^1$ $R^2$ und $R^3$ | unabhängig voneinander jeweils Wasserstoff, Methyl oder Methoxy, |
| $R^4$ | $C_1$-$C_4$-Alkyl und |
| $R^5$ | $C_2$-$C_4$-Alkyl, das durch Hydroxy substituiert ist, bedeuten. |

Insbesondere bevorzugt sind Azofarbstoffe der Formel I, in der $R^1$ und $R^2$ unabhängig voneinander Wasserstoff oder Methyl und $R^3$ Wasserstoff bedeuten.

Ganz besonders hervorzuheben sind Azofarbstoffe der Formel I, in der $R^4$ Ethyl und $R^5$ 2-Hydroxylbutyl, 1-Hydroxybut-2-yl oder 3-Hydroxybut-2-yl, oder in der $R^4$ n-Butyl und $R^5$ 2-Hydroxyethyl bedeuten.

Die erfindungsgemäßen Azofarbstoffe der Formel I können nach an sich bekannten Methoden erhalten

werden. Beispielsweise kann man ein Anilin der Formel II

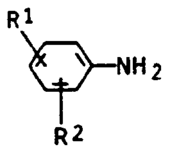 (II),

in der $R^1$ und $R^2$ jeweils die obengenannte Bedeutung besitzen, auf an sich bekanntem Wege diazotieren und anschließend mit einem N-Alkylanilin der Formel III

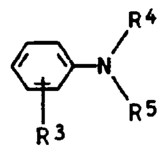 (III),

in der $R^3$, $R^4$ und $R^5$ jeweils die obengenannte Bedeutung besitzen, kuppeln.

Die Aniline II und N-Alkylaniline III sind größtenteils an sich bekannt oder können nach an sich bekannten Methoden erhalten werden.

Beispielsweise kann man Aminoverbindungen der Formel IV

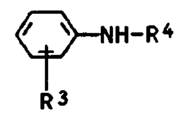 (IV),

in der $R^3$ und $R^4$ jeweils die obengenannte Bedeutung besitzen, mit Ethylenoxid, Propylenoxid oder 1,2- oder 2,3-Butylenoxid oxalkylieren. Die Oxalkylierung kann z.B. in Substanz oder in Gegenwart von wenig Wasser oder von wenig wäßriger Essigsäure bei einer Temperatur, die im allgemeinen bei 80 bis 100°C liegt, erfolgen. Das Molverhältnis Aminoverbindung IV: Alkylenoxid beträgt in der Regel 1:1 bis 1:2.

Wenn der 3-Hydroxypropyl- oder 4-Hydroxybutylrest eingeführt werden soll, besteht beispielsweise die Möglichkeit, die Aminoverbindung IV mit 3-Chlorpropanol, 3-Chlorpropylacetat, 4-Chlorbutanol oder 4-Chlorbutylacetat umzusetzen. Im Falle der Verwendung der Ester, werden diese nach Reaktion mit der Aminoverbindung IV verseift.

Die neuen Azofarbstoffe der Formel I weisen eine sehr gute Löslichkeit in organischen Lösungsmitteln, insbesondere in aromatischen oder aliphatischen Kohlenwasserstoffen auf.

Sie können in vorteilhafter Weise zum Markieren von Mineralölen verwendet werden. Demgemäß sind Mineralöle, enthaltend einen oder mehrere Azofarbstoffe der Formel I, ein weiterer Gegenstand der Erfindung.

Unter Mineralölen im erfindungsgemäßen Sinn sind beispielsweise Treibstoffe, wie Benzin, Kerosin oder Dieselöl, oder Öle, wie Heizöl oder Motorenöl, zu verstehen.

Die erfindungsgemäßen Farbstoffe eignen sich insbesondere zum Markieren von Mineralölen, bei denen gleichzeitig eine Kennzeichnung gefordert wird, z.B. aus steuerlichen Gründen. Um die Kosten der Kennzeichnung gering zu halten, strebt man an, für die Färbung möglichst ausgiebige Farbstoffe zu verwenden. Jedoch sind selbst sogenannte farbstarke Farbstoffe in hoher Verdünnung in Mineralölen rein visuell nicht mehr wahrnehmbar.

Die neuen Azofarbstoffe haben nun den Vorteil, daß sie neben ihrem Farbstoffcharakter auch noch als Kennzeichnungssubstanz geeignet sind, da sie mit wäßrigen oder wäßrig-alkoholischen Säuren eine intensive Färbung ergeben. Dieses Verhalten ist überraschend, da aus der EP-A-256 460 bekannt ist, daß nur solche Verbindungen als Markierungsmittel dienen, die eine acetalisierte Hydroxyalkylgruppe an der Kupplungskomponente aufweisen.

Zum Markieren von Mineralöl werden die erfindungsgemäßen Farbstoffe im allgemeinen in Form von Lösungen angewandt. Als Lösungsmittel eignen sich vorzugsweise aromatische Kohlenwasserstoffe, wie Toluol oder Xylol. Um eine zu hohe Viskosität der resultierenden Lösungen zu vermeiden, wählt man im allgemeinen eine Konzentration an Farbstoff von 30 bis 50 Gew.%, bezogen auf die Lösung.

Mittels der erfindungsgemäßen Farbstoffe gelingt es sehr einfach, markierte Mineralöle nachzuweisen, selbst wenn die Markierungssubstanzen nur in einer Konzentration von ungefähr 0,1 ppm vorliegen. Von besonderer Bedeutung ist dabei die einfache Durchführung des Tests zum Nachweis der erfindungsgemäßen Farbstoffe. Es genügt in der Regel, eine Menge von ungefähr 100 ml des zu prüfenden Mineralöls mit 10 ml der wäßrigen Säure auszuschütteln, um die Farbreaktion zu erhalten.

Als Säuren zur Durchführung der Farbreaktion eignen sich vorwiegend wäßrige Mineralsäuren, z.B. Salzsäure oder Schwefelsäure, oder aber wäßrig-alkoholische (zweckmäßig ethanolische) Salzsäure in einer Konzentration von ungefähr 3 bis 20 Gew.%, vorzugsweise 5 bis 10 Gew.%.

Die folgenden Beispiele sollen die Erfindung näher erläutern.

Beispiel 1

9,3 g Anilin wurden in einer Mischung aus 50 ml Wasser und 50 ml 5n-Salzsäure bei Raumtemperatur gelöst und nach Zugabe von 100 g Eis mit einer konzentrierten wäßrigen Lösung von 6,9 g Natriumnitrit versetzt. Die Diazotierung war im Verlauf von 30 Minuten bei 0 bis 5°C beendet; man entfernte darauf den Nitritüberschuß mit Amidosulfonsäure. Zur Lösung des Diazoniumsalzes tropfte man anschließend bei 10 bis 15°C unter intensivem Rühren eine Lösung von 21,7 g 3-Methyl-N-ethyl-N-(2-hydroxybutyl)anilin in 125 ml Toluol zu. Anschließend wurde der pH-Wert des Reaktionsgemisches mit 2,5n-Natriumacetatlösung erhöht. Die Kupplung war nach Rühren über Nacht bei 15 bis 20°C beendet. Nachdem durch mehrmaliges Waschen mit Wasser bei 60°C die organische Phase salzfrei war, erhielt man aus dieser nach dem Abdestilieren des Toluols 31 g eines teerartigen Farbstoffs der Formel

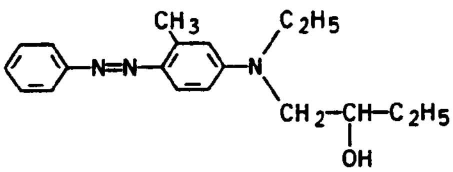
,

der sich mit gelber Farbe gut in Aromaten löst ($\lambda_{max}$ (Toluol): 413 nm).

Die in der folgenden Tabelle aufgeführten Farbstoffe werden in analoger Weise erhalten.

| Beispiel Nr. | Farbstoff | Farbton in Aromaten | $\lambda_{max}$ [nm] (Toluol) |
|---|---|---|---|
| 2 | 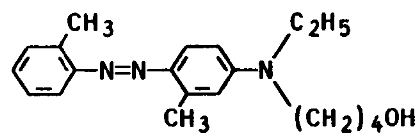 | gelb | 412 |
| 3 | 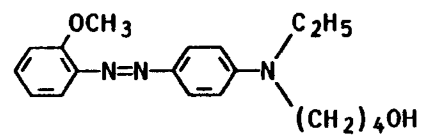 | gelb | 412 |
| 4 | 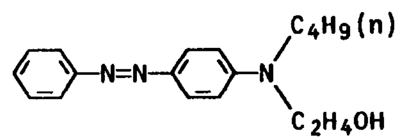 | gelb | 413 |
| 5 | 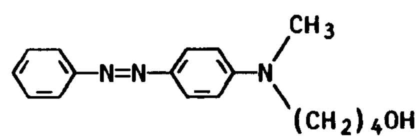 | gelb | 413 |
| 6 | 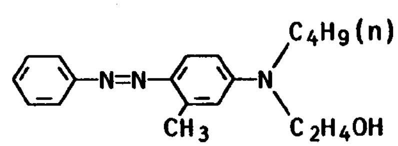 | gelb | 412 |

| Beispiel Nr. | Farbstoff | Farbton in Aromaten | $\lambda_{max}$ [nm] (Toluol) |
|---|---|---|---|
| 7 | 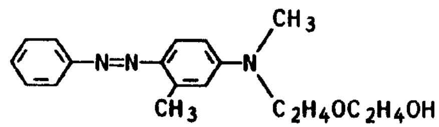 | gelb | 414 |
| 8 | 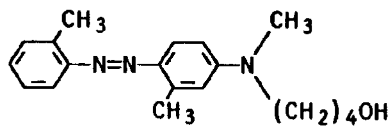 | gelb | 415 |
| 9 | 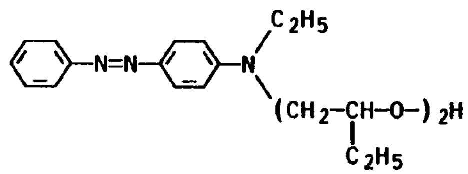 | gelb | 413 |
| 10 | 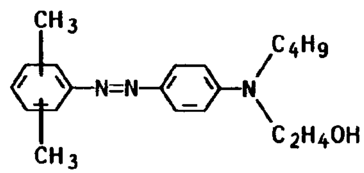 *) | gelb | 415 |
| 11 | 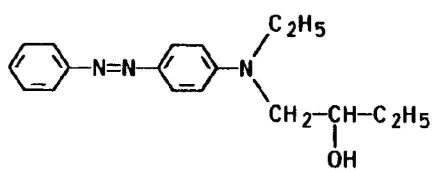 | gelb | 417 |

*) Isomerengemisch

| Beispiel Nr. | Farbstoff | Farbton in Aromaten | $\lambda_{max}$ [nm] (Toluol) |
|---|---|---|---|
| 12 | 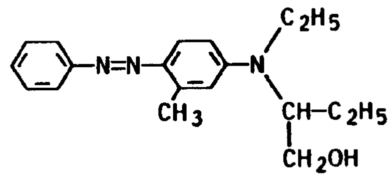 | gelb | 417 |
| 13 | 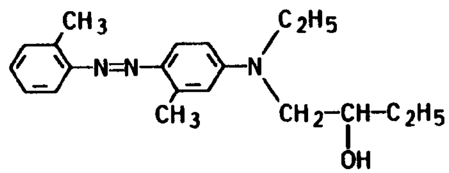 | gelb | 412 |
| 14 | 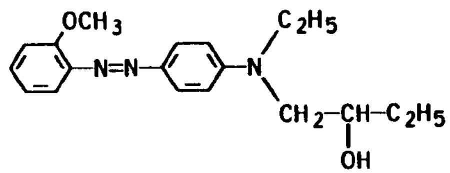 | gelb | 412 |
| 15 | 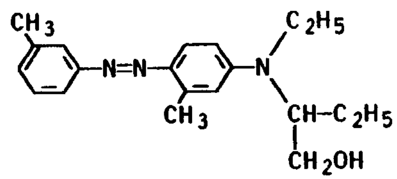 | gelb | 413 |
| 16 | 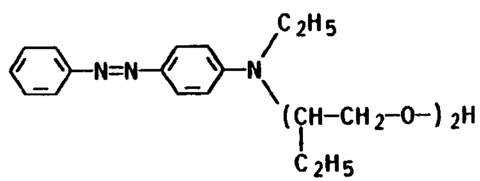 | gelb | 413 |

| Beispiel Nr. | Farbstoff | Farbton in Aromaten | $\lambda_{max}$ [nm] (Toluol) |
|---|---|---|---|
| 17 | 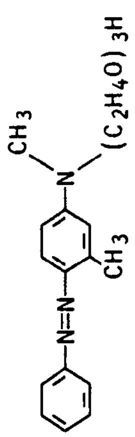 | gelb | 414 |
| 18 | 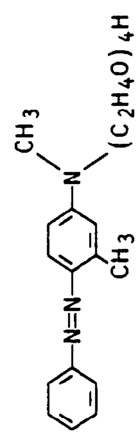 | gelb | 415 |

Beispiel 19 (Anwendung)

Unverbleiter Vergasertreibstoff wurde mit einer 60 gew.-%igen Lösung des Farbstoffs gemäß Beispiel Nr. 1 in Xylol markiert.

Der Zusatz betrug 15 mg der genannten Lösung pro Liter Treibstoff.

100 ml des zu prüfenden Vergaserkraftstoffes wurden mit 10 ml einer Mischung aus 5 ml Salzsäure (10 gew.-%ig) und 5 ml Ethanol kräftig geschüttelt (5 Minuten auf einem Schüttelgerät). Dabei färbte sich die alkoholisch-wäßrige Phase deutlich erkennbar rot. Nach kurzem Stehen, nachdem sich beide Phasen getrennt hatten, konnte man die rot gefärbte Schicht farbmetrisch gegen eine Lösung bekannter Konzentration vergleichen und so den Farbstoffgehalt quantitativ ermitteln. Auf diese Weise ließ sich auch noch eine Vermischung des markierten Vergaserkraftstoffes mit der 20-fachen Menge an unmarkiertem Benzin einwandfrei nachweisen (Konzentration an Farbstoff: 0,45 ppm).

Beispiel 20 (Anwendung)

Leichtes Heizöl mit honiggelber Eigenfarbe wurde mit einen 60 gew.-%igen Lösung des Farstoffs gemäß Beispiel Nr. 1 in Xylol markiert.

Der Zusatz an obiger Lösung betrug 20 ppm. Schüttelte man 100 ml dieses gelb gefärbten Heizöls mit 5 ml 10 gew.-%iger Salzsäure, so färbte sich die wäßrige Phase rot.

## Patentansprüche

1. Azofarbstoffe der Formel I

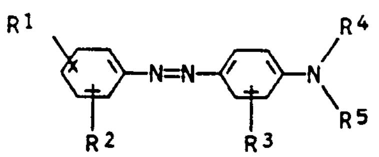

(I),

in der

| | |
|---|---|
| $R^1$, $R^2$ und $R^3$ | gleich oder verschieden sind und unabhängig voneinander jeweils Wasserstoff, $C_1$-$C_4$-Alkyl oder $C_1$-$C_4$-Alkoxy, |
| $R^4$ | $C_1$-$C_6$-Alkyl und |
| $R^5$ | $C_2$-$C_8$-Alkyl, das durch Hydroxy substituiert ist und durch 1 bis 3 Sauerstoffatome unterbrochen sein kann, bedeuten, |

mit der Maßgabe, daß die Summe der Kohlenstoffatome in den Resten $R^4$ und $R^5$ mindestens 5 beträgt.

2. Azofarbstoffe nach Anspruch 1, dadurch gekennzeichnet, daß $R^3$ in ortho-Position zur Azobrücke steht.

3. Azofarbstoffe nach Anspruch 1, dadurch gekennzeichnet, daß

| | |
|---|---|
| $R^1$, $R^2$ und $R^3$ | unabhängig voneinander jeweils Wasserstoff, Methyl oder Methoxy, |
| $R^4$ | $C_1$-$C_4$-Alkyl und |
| $R^5$ | $C_2$-$C_4$-Alkyl, das durch Hydroxy substituiert ist, bedeuten. |

4. Mineralöle, enthaltend einen oder mehrere Azofarbstoffe der Formel I gemäß Anspruch 1.

5. Verwendung der Azofarbstoffe gemäß Anspruch 1 zum Markieren von Mineralölen.

## Claims

1. Azo dyes of the formula I

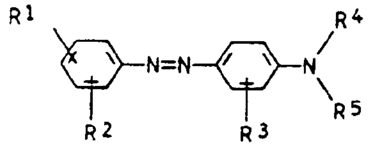

(I)

where

| | |
|---|---|
| $R^1$, $R^2$ and $R^3$ | are identical or different and each is independently of the others hydrogen, $C_1$-$C_4$-alkyl or $C_1$-$C_4$-alkoxy, |

| | |
|---|---|
| $R^4$ | is $C_1$-$C_6$-alkyl, and |
| $R^5$ | is $C_2$-$C_8$-alkyl which is substituted by hydroxyl and may be interrupted by from 1 to 3 oxygen atoms, |

with the proviso that the total number of carbon atoms in the radicals $R^4$ and $R^5$ is at least 5.

**2.** Azo dyes as claimed in claim 1, wherein $R^3$ is ortho to the azo linkage.

**3.** Azo dyes as claimed in claim 1, wherein

| | |
|---|---|
| $R^1$, $R^2$ and $R^3$ | are each independently of the others hydrogen, methyl or methoxy, |
| $R^4$ | is $C_1$-$C_4$-alkyl, and |
| $R^5$ | is $C_2$-$C_4$-alkyl which is substituted by hydroxyl. |

**4.** Mineral oils comprising one or more azo dyes of the formula I as set forth in claim 1.

**5.** The use of the azo dyes of claim 1 for marking mineral oils.

## Revendications

**1.** Colorants azoïques de formule I

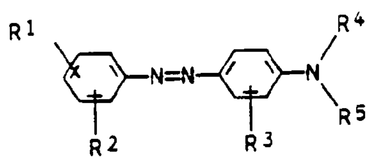

(I),

dans laquelle

| | |
|---|---|
| $R^1$, $R^2$ et $R^3$ | sont identiques ou différents et représentent chacun, indépendamment les uns des autres, un atome d'hydrogène ou un radical alkyle en $C_1$-$C_4$ ou alcoxy en $C_1$-$C_4$, |
| $R^4$ | représente un radical alkyle en $C_1$-$C_6$ et |
| $R^5$ | représente un radical alkyle en $C_2$-$C_8$ qui est substitué par un groupement hydroxy et peut être interrompu par 1 à 3 atomes d'oxygène, |

étant spécifié que la somme des atomes de carbone dans les restes $R^4$ et $R^5$ s'élève au moins à 5.

**2.** Colorants azoïques selon la revendication 1, caractérisés en ce que $R^3$ est en position ortho par rapport au pont azoïque.

**3.** Colorants azoïques selon la revendication 1, caractérisés en ce que

| | |
|---|---|
| $R^1$, $R^2$ et $R^3$ | représentent chacun, indépendamment les uns des autres, un atome d'hydrogène ou un radical méthyle ou méthoxy, |
| $R^4$ | représente un radical alkylke en $C_1$-$C_4$ et |
| $R^5$ | représente un radical alkyle en $C_2$-$C_4$ qui est substitué par un groupement hydroxy. |

**4.** Huiles minérales, contenant un ou plusieurs colorants azoïques de formule I selon la revendication 1.

**5.** Utilisation des colorants azoïques selon la revendication 1 pour le marquage d'huiles minérales.